# EUROPÄISCHE PATENTSCHRIFT

(11) **EP 0 893 295 B1**
(45) Veröffentlichungstag und Bekanntmachung des Hinweises auf die Patenterteilung: **23.01.2002**
(21) Anmeldenummer: 98113073.5
(22) Anmeldetag: 14.07.1998
(51) Int. Cl.: B60K 15/077

(54) **Kraftstofftank**
Fuel tank
Réservoir de combustible

(30) Priorität: 25.07.1997 DE 19731912
(43) Veröffentlichungstag der Anmeldung: 27.01.1999
(73) Patentinhaber: Kautex Textron GmbH & Co. KG., 53229 Bonn (DE)
(72) Erfinder: Richter, Benno, 53757 St. Augustin (DE); Acker, Michael, 53567 Asbach (DE)
(74) Vertreter: Koepsell, Helmut, Dipl.-Ing.

(56) Entgegenhaltungen:
- EP-A- 0 086 425
- EP-A- 0 775 606
- WO-A-92/03359
- DE-A- 2 847 117
- DE-U- 29 606 124
- GB-A- 2 236 288
- PATENT ABSTRACTS OF JAPAN vol. 96, no. 10, 31. Oktober 1996 -& JP 08 156617 A (MITSUBISHI), 18. Juni 1996

## Beschreibung

Die Erfindung betrifft einen Kraftstofftank für ein Kraftfahrzeug gemäß dem Oberbegriff des Anspruches 1.

Durch die Fahrbewegungen eines Kraftfahrzeuges ist der im Tank befindliche Kraftstoff in ständiger Bewegung, wobei diese Bewegungen insbesondere in Beschleunigungs- und Bremsphasen zu Geräuschen führen können, die als störend empfunden werden. Es ist zwar bekannt, in derartigen Kraftstofftanks Einbauten vorzusehen, die die Bewegungen des Kraftstoffes dämpfen, allerdings im wesentlichen mit der Zielsetzung, unter allen in der Praxis vorkommenden Fahrbedingungen im Bereich der Auslauföffnung des Tanks eine ausreichende Menge Kraftstoff zu halten, um so auch bei wenig gefülltem Tank eine ununterbrochene Versorgung des Motors mit Kraftstoff zu gewährleisten. Diese Einbauten in Form beispielsweise von Beruhigungstöpfen, -ringen oder dgl. weisen jedoch im Verhältnis zur Querschnittsfläche des Tanks verhältnismäßig kleine Dimensionen auf, so daß der größere Teil der Querschnittsfläche des Tanks frei bleibt und somit eine Schwallbewegung im Tank in Fahrtrichtung beispielsweise bei einem Bremsvorgang nicht wesentlich gedämpft wird. Demzufolge führt die dem sich bewegenden Kraftstoff innewohnende kinetische Energie beim mehr oder weniger ungebremsten im wesentlichen senkrechten Aufprall auf die Wandung des Tanks insbesondere auch in jenen Bereichen zu einer Umwandlung in Schallenergie, in denen der Kraftstoff beim Aufprall nicht oder nur zu einem geringen Teil ausweichen kann. Dabei handelt es sich beispielsweise um Eckbereiche oder andere Bereiche, die mehrseitig umschlossen sind. Selbstverständlich spielt auch der Weg eine Rolle, den der Kraftstoff innerhalb des Tanks zurücklegt, bevor er auf eine Wand auftrifft. Deshalb ist die Geräuschentwicklung insbesondere bei solchen Tanks sehr ausgeprägt, deren längste Erstreckung parallel zur Fahrtrichtung verläuft.

Es ist zwar zur Lösung dieses Problems bereits vorgeschlagen worden, den Kraftstofftank mit einer Einrichtung zur Aufnahme von Bewegungsenergie des darin befindlichen Kraftstoffes zu versehen derart, daß ein plattenförmiges Prallelement aus Kunststoffmaterial lokal zumindest in einem oberen Eckbereich des Kraftstoffbehälters vorgesehen ist (DE 39 05 611 C2). Diese Lösung ist jedoch verhältnismäßig aufwendig. Außerdem kann sie mit Schwierigkeiten verbunden sein, wenn der Tank einstückig z. B. im Blasverfahren aus Kunststoff hergestellt ist, wie dies heute häufig der Fall ist.

Ein Kraftstofftank gemäß Oberbegriff von Anspruch 1 ist beispielsweise aus der DE-A- 28 47 117 bekannt. Dort wird vorgeschlagen, als Schwallelement eine durchgehende Spirale vorzusehen, die neben dem Einfüllstutzen an der Seitenwand des Tanks beginnend einen Strömungskanal bildet, der in einem Windungszug bis in die Mitte des Tanks geführt wird.

Diese Ausbildung des Schwallelements setzt eine sehr einfache Geometrie des Tanks voraus und ist darüberhinaus nur mit außerordentlichem Aufwand in einem Tank plazierbar, insbesondere dann, wenn es sich um einen blasgeformten Kunststofftank handelt.

Aus der GB 2 236 288 A ist es bekannt, in einem aus Kunststoff ausgebildeten Tank wenigstens einen Abstandshalter vorzusehen, der die beiden sich gegenüberliegenden Tankwände derart verbindet, daß eine Ausdehnung des Tanks aufgrund von innerem Überdruck verhindert wird.

Aus der EP 0 775 606 A2 ist ein Kraftstofftank bekannt, dessen Innenraum durch Schottwände in getrennte Kammern unterteilt ist, die über Durchlassöffnungen in den Schottwänden miteinander kommunizieren. Die Schottwände sind im Grundriß wabenförmig ausgebildet, wodurch gleichzeitig die Festigkeit des Behälters erhöht wird. Solche Schottwände sind einerseits nur mit erheblichem Aufwand realisierbar, andererseits geht das Vorsehen einer Vielzahl von Schottwänden mit einem erheblichen Volumenverlust innerhalb eines Kraftstoffbehälters einher.

Aus der EP 0 086 425 ist ein Kraftstoffbehälter aus thermoplastischem Kunststoff bekannt, in dem ein Beruhigungstopf vorgesehen ist, der aus zwei aus einander gegenüberliegenden Tankwandungen herausgeformten, wulstartigen Erhebungen gebildet wird, die sich gegenseitig berühren und an den Berührungsstellen miteinander verbunden sind. Eine solche Ausbildung des Kraftstoffbehälters ist konstruktiv verhältnismäßig aufwendig, vor allen Dingen wird das Behältervolumen durch eine solche Anordnung deutlich reduziert.

Demzufolge liegt der Erfindung die Aufgabe zugrunde, einen Kraftstofftank der einleitend beschriebenen Art so auszugestalten, daß die durch die Schwallbewegungen des Kraftstoffes verursachten Geräusche zumindest weitgehend reduziert werden. Dies soll mit einfachen Mitteln geschehen, die keinen ins Gewicht fallenden Aufwand erfordern, leicht anzubringen sind und zudem das Volumen des Tanks nicht merklich verringern.

Diese Aufgabe wird mit den Merkmalen im Kennzeichen des Anspruches 1 gelöst.

Die Formgebung des Tanks basiert auf der Überlegung, daß es zur Erzielung des angestrebten Effektes ausreicht, die Bewegung des Kraftstoffes zumindest kurz vor Erreichen der jeweiligen Stirnwand des Tanks in einer Weise zu brechen, die nur in geringem Maße zu einer Umsetzung der kinematischen Energie zu Schallenergie führt. Dies kann einmal dadurch erreicht werden, daß die wirksamen Begrenzungsflächen des jeweiligen wandartigen Elementes zumindest in Teilbereichen unter einem spitzen Winkel zur Fahrtrichtung so verlaufen, daß der auf diese Begrenzungsflächen unter einem entsprechenden Winkel auftreffende Kraftstoff umgelenkt wird, wobei ohnehin ein Teil des Kraftstoffes durch die verbleibenden freien Querschnittsflächen zwischen dem wandartigen Element und dem jeweils benachbarten Wandbereich des Tanks hindurchfließt und durch den dabei auftretenden erhöhten Strömungswiderstand zusätzlich ein Teil der Bewegungsenergie verzehrt wird. Dabei ist es weiterhin möglich und ggf. zweckmäßig, das Einbauteil mit Löchern, Randausnehmungen od. dergl. zu versehen, durch die ebenfalls ein Teil des auf das Einbauteil auftreffenden Kraftstoffes hindurchtreten kann. Zweckmäßigerweise können diese Durchbrechungen im Einbauteil in den Bereichen vorgesehen sein, in deren Umgebung der Kraftstoff beim Auftreffen auf das Einbauteil nur wenig Ausweichmöglichkeiten findet, beispielsweise bei einem bogenförmig verlaufenden Einbauteil am Scheitelpunkt des Bogens, der sich allgemein in der Mitte des Einbauteils befinden wird, wo die im Zuge einer Schwallbewegung von beiden Seiten kommenden Kraftstoffströme zusammentreffen.

Erfindungsgemäß hat sich die Verwendung eines Ringes oder kurzen geschlossenen Profilabschnittes, z.B. eines Rohrabschnittes herausgestellt, dessen Längsachse im wesentlichen senkrecht zur Fahrtrichtung und somit bei üblicher Ausgestaltung des Tanks vertikal verläuft. Jede Hälfte des Rohrabschnitts kann dabei ein Wandelement darstellen, welches einen Wandbereich des Tanks abschirmt. Ein solcher Rohrabschnitt kann im allgemeinen lose in den Tank eingelegt werden. Bei Fertigung aus elastischem Kunststoff besteht die Möglichkeit, ihn ggf. in zusammengedrücktem Zustand durch eine relativ kleine Öffnung in der Tankwandung in den Tank einzuführen. In Abhängigkeit von der Topographie des Tanks wird es dabei häufig möglich sein, auf besondere Mittel zum Befestigen des Ringes zu verzichten, zumal der Rohrabschnitt an seinen Stirnenden in vielen Fällen an die Gestaltung des Tanks, also beispielsweise an den Verlauf von Bodenwandung und/oder oberseitiger Wandung, angepaßt sein muß, so daß sich zwangsläufig formschlüssige Verbindungen zwischen Tank und Rohrabschnitt ergeben, die letzteren in seiner Lage halten. Überdies besteht auch die Möglichkeit, den Rohrabschnitt - oder auch ein anders ausgebildetes Einbauteil - unter einer gewissen Vorspannung nicht nur in den Tank einzubringen, sondern auch darin anzuordnen, z. B. dergestalt, daß der Durchmessesr des Rohrabschnittes in unbeanspruchtem Zustand etwas größer ist als der Breite oder einer sonstigen entsprechenden Dimension des Tanks entspricht, so daß der Rohrabschnitt eine gewisse elastische Verformung erfährt, die zu einer ellipsenähnlichen oder auch zu einer anderen Form führt, die von der eines Kreisringes abweicht. Hinsichtlich Anordnung und Gestaltung des Einbauteils kommt es unabhängig von Ausgestaltung und Anzahl im wesentlichen darauf an, daß das Einbauteil vom jeweils zugeordneten Ende des Tanks in einem so geringen Abstand verläuft, daß die zwischen Einbauteil und benachbartem Tankende befindliche Kraftstoffmenge, die aufgrund der Fahrbewegungen des Fahrzeuges ebenfalls an den Schwallbewegungen teilnimmt, zu gering ist, als daß die ihr innewohnende kinetische Energie ausreichen würde, ein störendes Geräusch zu erzeugen. Ein zu einer Ellipse oder dgl. geformter Rohrabschnitt kann diese Bedingungen unter Umständen besser erfüllen als ein kreisförmiger Rohrabschnitt, wenn seine längere Achse im wesentlichen parallel zur Fahrtrichtung verläuft, da dann die beiden kreisbogenförmigen Abschnitte, die jeweils einer der beiden Enden des Tanks zugeordnet sind, sich in einem kürzeren Abstand von diesem Ende befinden.

Die elastische Verformbarkeit des Rohrabschnittes - oder eines anders ausgestalteten Einbauteiles - kann dazu führen, daß das Einbauteil sich auch unter der Einwirkung der kinetischen Energie des aufprallenden Kraftstoffes verformt. Dies würde jedoch keinen Nachteil darstellen, da ein Teil der kinetischen Energie des sich bewegenden Kraftstoffes durch die elastische Verformung des Einbauteiles aufgezehrt würde. Zwar wäre es unvermeidbar, daß das Einbauteil aufgrund seiner Elastizität nach Beendigung der Einwirkung durch den sich bewegenden Kraftstoff wieder in seine ursprüngliche Gestalt zurückfedert. Die dadurch auf den Kraftstoff übertragenen Bewegungen wären jedoch so gering, daß sie unter keinen Umständen zu einem als störend empfundenen Geräusch führen könnten.

Wenn davon ausgegangen wird, daß die seitlichen Begrenzungswände des Tanks zumindest in Teilbereichen im wesentlichen parallel zur Fahrtrichtung und demzufolge bei Verwendung eines Rohrabschnitts diese Wandbereiche nach Art einer Tangente zu diesem oder zu einem anderen gebogenen wandartigen Element verlaufen, bilden sich im Anschluß an die Berührungsbereiche zwischen Wandung und diesem Element bzw. bei fehlender Berührung im Anschluß an die beiden seitlichen Scheitelbereiche z. B. des Rohrabschnittes spitzwinklige, zwickelförmige Raumbereiche, die, wenn keine besonderen Vorkehrungen getroffen werden, dem Kraftstoff bei Bewegung in diesen Raum hinein nur wenig Ausweichmöglichkeit lassen. Es ist deshalb zweckmäßig, die Anordnung so zu treffen, daß diese Bereiche an der dem jeweiligen Tankende zugekehrten Seite des wandartigen Elementes bzw. Einbauteiles zugekehrt sind. Bei Verwendung z. B. eines Rohrabschnittes oder von kreisbogenförmig gekrümmten Einbauteilen ist dann der Abstand zwischen benachbartem Tankende und Einbauteil im mittleren Bereich desselben, also beispielsweise im Scheitelbereich, am kürzesten. Dabei kann es ohnehin zweckmäßig sein, zwischen dem Einbauteil und den Seitenwandungen des Tanks einen Durchgang für den Kraftstoff freizulassen, dessen Querschnittsabmessungen so gewählt sind, daß einerseits beim Durchgang des Kraftstoffes durch den vergrößerten Strömungswiderstand ein merklicher Teil der kinetischen Energie abgebaut wird, andererseits jedoch nicht soviel Kraftstoff hindurchtreten kann, daß an irgendeiner Stelle eine unerwünschtes Geräusch auftritt.

Darüberhinaus kann das Einbauteil auch derart geneigt verlaufen, daß es mit der Bodenwandung und/oder der oberseitigen Begrenzung einen spitzen Winkel einschließt, so daß dadurch der Kraftstoff noch zusätzlich eine Umleitung seiner Bewegung erfährt. Dabei ist dann ggf. auch darauf zu achten, daß die an der Bodenwandung und an der oberseitigen Wandung verbleibenden freien Querschnitte ausreichen, um ein geräuscherzeugendes Aufprallen des Kraftstoffes an dem wandartigen Element zu vermeiden.

In der Zeichnung sind einige Ausführungsbeispiele der Erfindung im Schema dargestellt. Es zeigen:
- Fig. 1: die Seitenansicht eines in ein Kraftfahrzeug einzubauenden Kraftstofftankes,
- Fig. 2: die dazugehörige Draufsicht,
- Fig. 3: einen Schnitt nach der Linie III-III der Fig. 2,
- Fig. 4: stark schematisiert einen Horizontalschnitt durch einen Kraftstofftank, der kein Teil der Erfindung ist,
- Fig. 5: eine der Fig. 4 entsprechende Darstellung einer erfindungsgemäßen Ausführungsform,
- Fig. 6: eine der Fig. 4 entsprechende Darstellung einer weiteren erfindungsgemäßen Ausführungsform,
- Fig. 7A bis E: unterschiedliche Ausführungsformen von Einbauteilen im Längsschnitt.

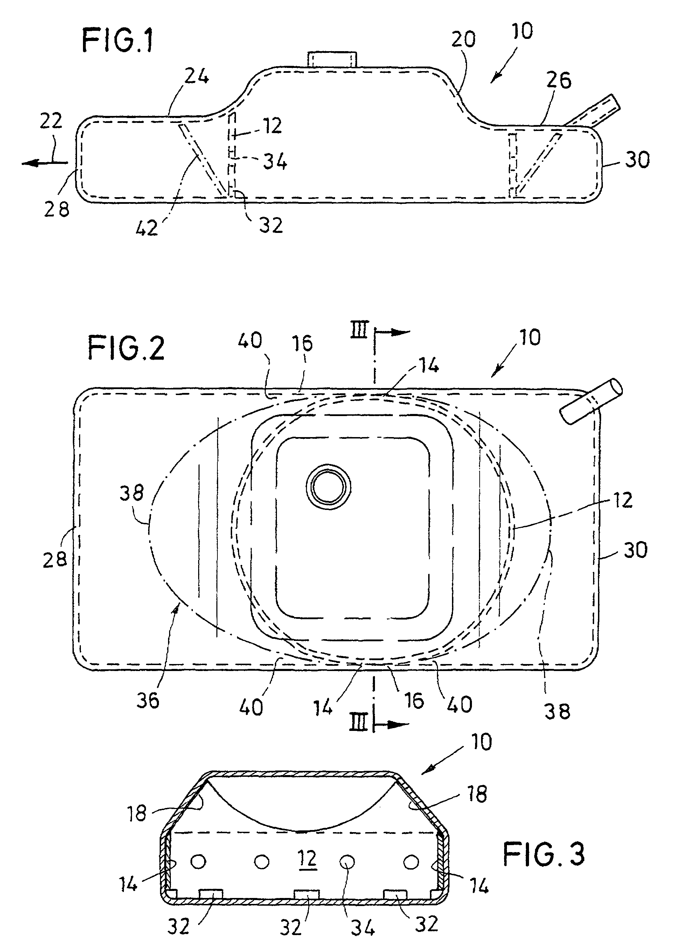

Der Kraftstofftank gemäß den Fig. 1 - 3 ist mit einem im wesentlichen rechteckigen Grundriß versehen, obwohl dies für die Anwendung der Erfindung keine Voraussetzung darstellt. Dies gilt insbesondere dann, wenn der Kraftstofftank einstückig aus thermoplastischem Kunststoff beispielsweise im Blasverfahren hergestellt ist. Dann wird die Gestalt des Tanks von dem für den Tank im Fahrzeug verfügbaren Raum bestimmt sein. Im mittleren Bereich des Tanks 10 ist ein Rohrabschnitt 12 derart angeordnet, daß seine Längsachse im wesentlichen vertikal verläuft, wobei sein Durchmesser etwa der Breite des Tankes 10 entspricht und der Rohrabschnitt 12 somit mit seinen beiden seitlichen Scheitelbereichen 14 an der jeweiligen Seitenwandung 16 des Tankes 10 anliegt. Der Rohrabschnitt 12 ist oberseitig zur Anpassung an die insbesondere aus den Fig. 1 und 3 hervorgehende Topographie des Tanks 10 mit Ausschnitten 18 versehen, deren Verlauf dem Verlauf der oberseitigen Wandung 20 angepaßt ist. Der Rohrabschnitt 12 ist im wesentlichen zylindrisch und im mittleren Bereich des Tankes angeordnet, der oberseitig gegenüber den in Fahrtrichtung 22 vorn und hinten liegenden Tankbereichen 24 bzw. 26 nach oben vorsteht, wenngleich keines dieser Merkmale für die Erfindung erforderlich ist.

Der Rohrabschnitt 12 ist, wie bereits gesagt, insbesondere hinsichtlich seiner oberen Begrenzungen mit den Ausschnitten 18 an die innere Begrenzung des Tankes 10 angepaßt, ohne jedoch genau in den Tank eingepaßt zu sein. Dies ist zur Erzielung des angestrebten Zweckes auch nicht erforderlich, da es lediglich darauf ankommt zu verhindern, daß bei Bewegung des Kraftstoffes im Tank in Fahrtrichtung 22 oder entgegengesetzt dazu der im mittleren Bereich des Tanks befindliche Kraftstoff ungehindert in die Endbereiche 24 und 26 des Tankes strömen kann und dann unter unerwünschter Geräuschbildung auf die stirnseitigen Begrenzungswände 28 bzw. 30 auftrifft. Andererseits soll natürlich der Durchfluß des Kraftstoffes zwischen dem mittleren Bereich und den beiden Endbereichen 24 und 26 unter normalen Betriebsbedingungen nicht behindert werden. Aus diesem Grunde ist auch der Rohrabschnitt 12 mit Randausnehmungen 32 am unteren Stirnende und mit Durchbrechungen 34 im mittleren Bereich versehen, die dem Kraftstoff in jedem Fall einen Durchgang eröffnen, aber bei starken Schwallbewegungen desselben aufgrund des hohen Strömungswiderstandes einen Teil der kinetischen Energie verbrauchen. Bei der gegebenen Gestalt des Tanks und des Rohrabschnittes ist es auch nicht erforderlich, für den Rohrabschnitt besondere Befestigungsmittel vorzusehen, da selbst dann, wenn der Rohrabschnitt beispielsweise an seinem oberen Ende in einem kurzen Abstand vom jeweils gegenüberliegenden Bereich der oberen Wandung 20 endet, die Lage des Rohrabschnittes im Tank in jedem Fall gesichert ist. Kleine Bewegungen von einigen Millimetern sind ohnehin nicht störend, solange diese Bewegungen keine unerwünschten Geräusche erzeugen. Im allgemeinen wird dies jedoch ohnehin nicht der Fall sein, wenn sowohl der Tank als auch der Rohrabschnitt aus thermoplastischem Kunststoff bestehen.

Die im vorderen und hinteren Bereich 24 bzw. 26 des Tanks außerhalb des vom Rohrabschnitt 12 umschlossenen Bereiches jeweils befindliche Kraftstoffmenge wird trotz des Einbauteiles bei starker Beschleunigung oder starker Verzögerung in üblicher Weise gegen die jeweils zugeordnete Stirnfläche 28 bzw. 30 prallen. Da diese Menge jedoch wesentlich kleiner ist als die Gesamtmenge des beim jeweiligen Füllungsgrad im Tank befindlichen Kraftstoffes, ist auch die Geräuschentwicklung entsprechend geringer. Es wird also im Einzelfall darauf ankommen, durch entsprechende Versuche festzustellen, wie groß die außerhalb des eine Unterteilung des Tanks bewirkenden Rohrabschnittes 12 vorn und hinten liegenden Bereiche 24 bzw. 26 sein dürfen, damit der angestrebte Effekt noch erreicht wird. Dabei spielt auch der Weg in Fahrtrichtung 22 oder entgegengesetzt dazu eine Rolle, den der im vorderen bzw. hinteren Bereich befindliche Kraftstoff noch ungehindert zurücklegen kann.

Falls ein mehr oder weniger zylindrisch begrenzter Rohrabschnitt bei einem beispielsweise relativ langem, jedoch schmalem Tank in den Endbereichen zu große Volumina freiläßt, besteht die Möglichkeit, den Rohrabschnitt analog der in Fig. 2 strichpunktiert angedeueten Ausgestaltung 36 im wesentlichen elliptisch auszuführen, wodurch die freien Räume der Endbereiche merklich reduziert werden, wie dies insbesondere Fig. 2 zeigt. Auch hier könnte ein Rohrabschnitt aus elastischem Kunststoff verwendet werden, der dann innerhalb des Tankes in die entsprechende Form gebracht wird, in der er dann unter vorspannung gehalten wird. Das Einbringen eines derartigen - oder auch anders gestalteten Rohrabschnittes oder sonstigen wandartigen Elementes - stellt im allgemeinen auch bei einem einstückigen Tank kein sehr großes Problem dar, da der Tank ohnehin mit einer ggf. wieder dauerhaft zu verschließenden Öffnung versehen werden muß, um die für den Betrieb des Kraftfahrzeuges erforderlichen Elemente, beispielsweise Pumpen, Füllstandsanzeiger usw., im Tank anbringen zu können.

Andererseits besteht aber auch die Möglichkeit, das Profilteil oder ein anderes wandartiges Element in üblicher Weise beim Herstellen des Tanks im Blasverfahren in den Vorformling, aus welchem der Tank mittels Aufweiten hergestellt wird, einzubringen, so daß ein nachträgliches Einbringen dieses wandartigen Elementes in den Tank nicht erforderlich ist. Dabei kann, falls das Element aus einem Material besteht, das mit dem den Tank bildenden Material verschweißbar ist, zugleich auch bei der Herstellung des Tanks in der Blasform das wandartige Element an der Tankwandung durch eine Schweißverbindung befestigt werden.

Da sowohl beim zylindrischen als auch beim ellipsenförmigen Rohrabschnitt im Falle der Beschleunigung oder Verzögerung die im Bereich innerhalb des Rohrabschnittes in Richtung auf die jeweilige Stirnwand strömenden Kraftstoffmengen zur Mitte, d. h., in den in Fahrtrichtung 22 vorn bzw. hinten liegenden Scheitelbereich 38 des Rohrabschnittes geführt werden mit dem Ergebnis, daß dort zwei Hauptströme zusammentreffen, kann es zweckmäßig sein, insbesondere in diesen Scheitelbereichen Durchbrechungen in der Wandung des Rohrabschnittes vorzusehen, damit ein Teil dieses Kraftstoffes eine Ausweichmöglichkeit hat, wobei dann die Größe dieser Durchbrechungen 34 so bemessen sein muß, daß nicht zuviel Kraftstoff in den vorderen bzw. hinteren Bereich strömt und die dort befindliche Kraftstoffmenge während der Bewegung in Richtung auf die jeweilige Stirnwand 28 bzw. 30 merklich vergrößert. Auch hier gilt, daß dies durch wenige einfache Versuche festgestellt werden kann.

Es kann andererseits aber auch zweckmäßig sein, nahe den seitlichen Scheitelbereichen des Rohrabschnittes Durchbrechungen vorzusehen, die einen Durchgang für eine geringere Kraftstoffmenge pro Zeiteinheit ermöglichen. Dabei geht es nicht so sehr um den innerhalb des Rohrabschnittes befindlichen Kraftstoffanteil, als vielmehr um den im vorderen bzw. hinteren Bereich 24 bzw. 26 befindlichen Kraftstoffanteil, wenn dieser eine von der jeweiligen Stirnwand 28 bzw. 30 weg gerichtete Bewegung ausführt, an deren Ende er auf den den jeweiligen Tankbereich 24 bzw. 26 begrenzendes Wandteil des Rohrabschnittes trifft. Hier könnte die Gefahr bestehen, daß auch bei geringeren Kraftstoffmengen es zu einer merklichen Geräuschentwicklung kommt, da der im Tankbereich 24 bzw. 26 befindliche Kraftstoff etwa hälftig in die sich verengenden zwickelartigen Bereiche 40 strömt und dort wenig Ausweichmöglichkeiten findet. Ein wesentlicher Vorteil dieser - und auch anderer Ausführungsformen - der Erfindung besteht gerade darin, daß diese mehrseitig begrenzten Bereiche, die dem Kraftstoff keine Ausweichmöglichkeit bieten, in dem vom jeweiligen Rohrabschnitt umschlossenen Hauptbereich des Tanks nicht vorhanden sind. Auch hier könnte unter Zugrundelegung beispielsweise der Abmessungen und Ausgestaltungen der Fig. 2 ein elliptischer Rohrabschnitt günstiger sein, da er bei entsprechender Bemessung das Volumen in den beiden Endbereichen 24 zw. 26 so verringert, daß die in die Zwickel 40 strömenden Kraftstoffmengen zu gering sind, als daß sie beim Aufprall auf die dort befindlichen Wandteile ein störendes Geräusch erzeugen.

Es ist darüberhinaus auch möglich, den Rohrabschnitt in Richtung seiner Längsachse etwa konisch sich erweiternd auszubilden, wie dies in Fig. 1 bei 42 strichpunktiert dargestellt ist. Hier würde der Kraftstoff innerhalb des Rohrabschnittes zusätzlich in Richtung auf die obere Begrenzungswand 20 geführt werden. Welche dieser Ausgestaltungen jeweils optimal ist, wird sich auch aus der Gestaltung des Kraftstofftankes 10 ergeben, dessen Seitenwände und oberseitigen und unterseitigen Wände abweichend von den in der Zeichnung dargestellten Ausführungsbeispielen sehr unregelmäßig und ungleichmäßig verlaufen können.

Selbstverständlich ist es möglich und im allgemeinen auch notwendig, innerhalb des jeweiligen Rohrabschnittes die üblichen Schwalltöpfe und sonstigen die Bewegungen des Kraftstoffes hemmenden Mittel vorzusehen, also beispielsweise jene Einrichtungen, die immer eine Mindestmenge an Kraftstoff in jedem Fahrzustand des Fahrzeuges im Bereich der in der Zeichnung ebenfalls nicht dargestellten Auslauföffnung halten, damit die Kraftstoffzufuhr auch bei extrem geneigten Wagen oder langen Kurvenfahrten nicht unterbrochen wird.

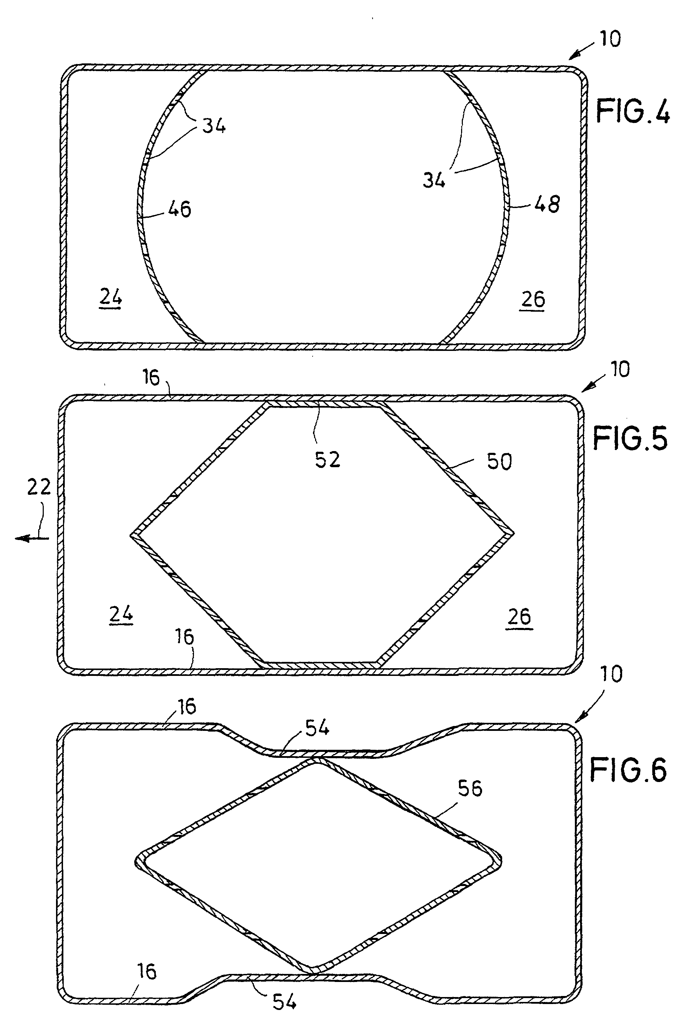

Dies gilt auch für die Ausführungen gemäß den Fig. 4 - 6, von denen Fig. 4 eine Ausführungsform, die kein Teil der Erfindung ist, zeigt, bei welcher zwei wandartige Einbauelemente 46, 48 vorgesehen sind, die jeweils den Abschnitt eines Kreisbogens bilden. Hier besteht bezüglich der Gestaltung und der Aufteilung der durch die Einbauelemente gebildeten einzelnen Bereiche im Tank 10 eine größere Gestaltungsfreiheit als bei Verwendung eines einstückigen Einbauelementes. Insbesondere ist es möglich, die Volumina in den Endbereichen 24, 26 in Abhängigkeit vom Ort des Einbaus der Einzelteile 46, 48 frei zu wählen. Ferner gilt auch hier, daß in den Einbauteilen Durchbrechungen 34 und Randausnehmungen vorgesehen sein können, um insbesondere dort, wo sich die Kraftstoffströme unter dem Einfluß der Beschleunigung oder Verzögerung konzentrieren oder in mehrseitig begrenzte Bereiche einfließen, zusätzliche Ausweichmöglichkeiten bereitzustellen.

Beim Tank gemäß Fig. 5 ist das Einbauteil 50 wiederum einstückig, jedoch als winkliger Profilabschnitt ausgebildet, wobei durch die im wesentlichen parallel zur Fahrtrichtung 22 verlaufenden Wandbereiche 52 in Abhängigkeit von deren Länge ebenfalls das Volumen des jeweiligen Endbereiches 24, 26 gewählt werden kann.

Beim Ausführungsbeispiel gemäß Fig. 6 ist der Tank 10 etwas schmaler und darüberhinaus in den Seitenwandungen 16 mit Einziehungen 54 versehen, wobei wiederum ein Einbauteil 56 in Form eines geschlossenen Profils vorgesehen ist, welches etwa rautenförmig begrenzt ist.

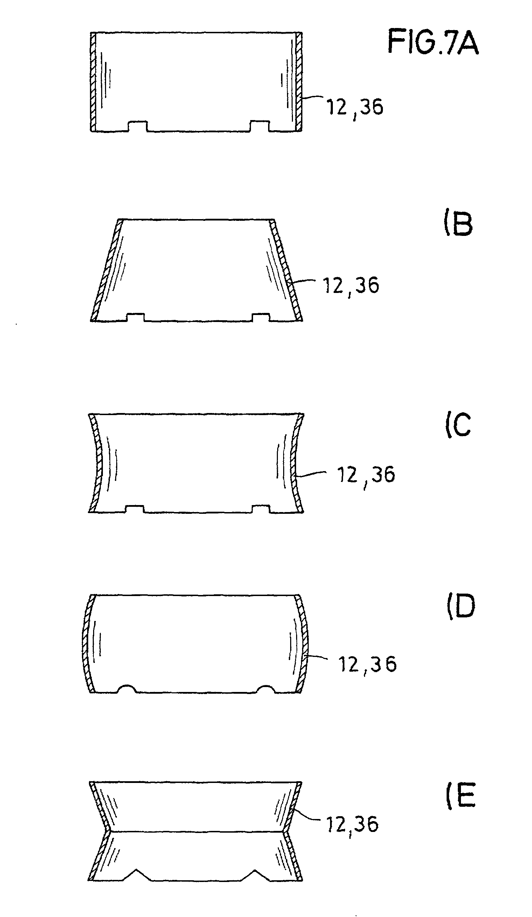

In den Fig. 7A - E sind weitere Ausführungsmöglichkeiten des Einbauteiles dargestellt, wobei es sich jeweils um einen Längsschnitt durch ein einstückiges Einbauteil handelt. Allerdings könnten die dargestellten Formen und Begrenzungen auch bei getrennten Einbauteilen gemäß Fig. 4 Anwendung finden, ggf. auch derart, daß dem einen Endbereich ein Einbauteil beispielsweise gemäß Fig. 7C und dem anderen ein solches gemäß Fig. 7E zugeordnet ist in Abhängigkeit von der Gestaltung des Tankes. Dies könnte bei extrem unregelmäßig gestalteten Tanks ohnehin ein Vorteil der zweiteiligen Anordnung gemäß Fig. 4 sein, da sie eine größere Gestaltungsfreiheit erlaubt. zu den konkreten Ausgestaltungen der unterschiedlichen Einbauteile wird auf die Fig. 7A - E verwiesen.

Komplizierter gestaltete Einbauteile könnten ggf. auch einstückig im Blasverfahren hergestellt und nachträglich durch einfache Nachbearbeitung in die jeweils erforderliche Gestalt gebracht werden. In jedem Fall gilt, daß die Erfindung die Möglichkeit schafft, den eigentlichen Tankes unabhängig von Erwägungen, die mit der Geräuschbildung zusammenhängen, auszugestalten, ohne daß für die zur Geräuschreduzierung erforderlichen Maßnahmen ein ins Gewicht fallender Mehraufwand erforderlich wäre.

## Patentansprüche

1. Kraftstofftank (10) für ein Kraftfahrzeug, der in seinem Innenraum mit Einbauten zur Reduzierung der Schwallbewegungen des Kraftstoffes versehen ist, wobei innerhalb des Tanks in einem Abstand von dessen in Fahrtrichtung (22) vorderem (28) bzw. hinterem Ende (30) des Tanks bezogen auf dessen Einbaulage wenigstens ein die Schwallbewegungen reduzierendes wandartiges Element (12; 36; 42; 46; 48; 50; 56) angeordnet ist, welches sich zumindest über einen wesentlichen Teil der Höhe und der Breite des Tanks (10) erstreckt, wobei die wirksamen Begrenzungsflächen des Elements zumindest in Teilbereichen bezogen auf die Einbaulage des Tanks unter einem spitzen Winkel zur Fahrtrichtung verlaufen und daß der Abstand zwischen wandartigem Element und benachbarten abzuschirmenden Wandteilen so gewählt ist, daß das Volumen des in dem jeweiligen Bereich zwischen wandartigem Element und abzuschirmendem Wandbereich befindlichen Kraftstoffs nicht ausreicht, um unerwünschte Schwallgeräusche zu erzeugen, **dadurch gekennzeichnet, daß** das wandartige Element als geschlossener Profilabschnitt (12; 36; 42; 36; 48) ausgebildet ist, dessen Längsachse im wesentlichen senkrecht zur Fahrtrichtung (22) verläuft.

2. Kraftstofftank nach Anspruch 1, **dadurch gekennzeichnet, daß** ein zwischen wandartigem Element (12; 36; 42; 46, 48; 50; 56) und einer Wandung (16) des Kraftstofftanks gebildeter spitzer Winkel (40) sich an der dem jeweils abzuschirmenden Wand (28, 30) zugekehrten Seite des wandartigen Elementes befindet.

3. Kraftstofftank nach Anspruch 1, **dadurch gekennzeichnet, daß** das wandartige Element (12; 36; 42; 46, 48; 50; 56) mit Löchern (34) und/oder bodenseitigen Randausnehmungen (32) versehen ist.

4. Kraftstofftank nach Anspruch 1, **dadurch gekennzeichnet, daß** jedem abzuschirmenden Wandbereich (28, 30) ein besonderes wandartiges. Element (42, 46) zugeordnet ist.

5. Kraftstofftank nach Anspruch 1, **dadurch gekennzeichnet, daß** das wandartige Element lose im Krafstofftank angeordnet ist.

6. Kraftstofftank nach Anspruch 1, **dadurch gekennzeichnet, daß** das wandartige Element aus elastischem Material, vorzugsweise Kunststoff besteht.

7. Kraftstofftank nach Anspruch 1, **dadurch gekennzeichnet, daß** das wandartige Element (12) an die Konturen des Tanks angepaßt ist.

8. Kraftstofftank nach Anspruch 1, **dadurch gekennzeichnet, daß** das wandartige Einbauteil unter einer Vorspannung im Tank angeordnet ist.

9. Kraftstofftank nach Anspruch 1, **dadurch gekennzeichnet, daß** das Einbauteil einstückig im Blasverfahren aus thermoplastischem Kunststoff hergestellt ist.

10. Kraftstofftank nach Anspruch 1, **dadurch gekennzeichnet, daß** das wandartige Einbauteil bei der Herstellung des Kraftstofftanks in diesen eingebracht wird.

11. Kraftstofftank nach Anspruch 10, **dadurch gekennzeichnet, daß** das Einbauteil zumindest teilweise aus einem Werkstoff, z. B. thermoplastischem Kunststoff, besteht, der mit dem Werkstoff, aus welchem der Tank mindestens teilweise besteht, verschweißbar ist und während der Herstellung des Tanks mittels einer Schweißverbindung an dessen Wandung befestigt ist.

12. Kraftstofftank nach Anspruch 11, **dadurch gekennzeichnet, daß** das Einbauteil mit der bodenseitigen Wandung des Kraftstofftanks verbunden ist.

13. Kraftstofftank nach Anspruch 11, **dadurch gekennzeichnet, daß** das Einbauteil mit wenigstens einer Seitenwandung des Tanks verbunden ist.

## Claims

1. A fuel tank (10) for a motor vehicle, which in its interior is provided with internal fitments for reducing the surge movements of the fuel, wherein arranged within the tank at a spacing from the front end (28) and the rear end (30) respectively of the tank in the direction of travel (22) in relation to the position of installation thereof is at least one wall-like element (12; 36; 42; 46; 48; 50; 56) which reduces the surge movements and which extends at least over a substantial part of the height and the width of the tank (10), wherein the effective boundary surfaces of the element extend at an acute angle relative to the direction of travel at least in partial regions in relation to the position of installation of the tank and the spacing between the wall-like element and adjacent wall portions to be screened is so selected that the volume of the fuel in the respective region between the wall-like element and the wall region to be screened is not sufficient to produce unwanted surge noises, **characterised in that** the wall-like element is in the form of a closed profile portion (12; 36; 42; 36; 48) whose longitudinal axis extends substantially perpendicular to the direction of travel (22).

2. A fuel tank according to claim 1 **characterised in that** an acute angle (40) formed between the wall-like element (12; 36; 42; 46, 48; 50; 56) and a wall (16) of the fuel tank is at the side of the wall-like element, which faces towards the respective wall (28, 30) to be screened.

3. A fuel tank according to claim 1 **characterised in that** the wall-like element (12; 36; 42; 46, 48; 50; 56) is provided with holes (34) and/or edge recesses (32) at the bottom.

4. A fuel tank according to claim 1 **characterised in that** a particular wall-like element (42, 46) is associated with each wall region (28, 30) to be screened.

5. A fuel tank according to claim 1 **characterised in that** the wall-like element is arranged loosely in the fuel tank.

6. A fuel tank according to claim 1 **characterised in that** the wall-like element comprises elastic material, preferably plastics material.

7. A fuel tank according to claim 1 **characterised in that** the wall-like element (12) is adapted to the contours of the tank.

8. A fuel tank according to claim 1 **characterised in that** the wall-like installation member is arranged under a bias in the tank.

9. A fuel tank according to claim 1 **characterised in that** the installation member is produced in one piece in a blow moulding process from thermoplastic material.

10. A fuel tank according to claim 1 **characterised in that** the wall-like installation member is introduced into the fuel tank upon manufacture thereof.

11. A fuel tank according to claim 10 **characterised in that** the installation member at least partially comprises a material, for example thermoplastic material, which can be welded to the material of which the tank at least partially consists and is secured to the wall of the tank by means of a welded join during manufacture of the tank.

12. A fuel tank according to claim 11 **characterised in that** the installation member is connected to the bottom wall of the fuel tank.

13. A fuel tank according to claim 11 **characterised in that** the installation member is connected to at least one side wall of the tank.

## Revendications

1. Réservoir de carburant (10) pour un véhicule automobile, muni dans son espace intérieur d'inserts pour réduire les mouvements de clapotement du carburant, au moins un élément en forme de paroi (12; 36; 42; 46; 48; 50; 56) réduisant les mouvements de clapotement, qui s'étend au moins sur une partie essentielle de la hauteur et de la largeur du réservoir (10) étant disposé à l'intérieur du réservoir, et ceci avec un espacement par rapport à l'extrémité avant (28) ou à l'extrémité arrière (30) du réservoir en direction du déplacement du véhicule (22) et en fonction de sa position de montage, les surfaces efficaces de limitation de l'élément s'étendant, au moins dans des zones partielles par rapport à la position de montage du réservoir, avec un angle aigu en direction du déplacement du véhicule et l'espacement entre l'élément en forme de paroi et les parties de parois voisines à mettre à l'abri des mouvements du carburant étant choisi de telle manière que le volume de carburant se trouvant dans la zone respective entre l'élément en forme de paroi et la zone de paroi à mettre à l'abri des mouvements du carburant ne soit pas suffisant pour produire des bruits de clapotement non souhaitables, **caractérisé en ce que** l'élément en forme de paroi est réalisé sous forme de section de profil fermée (12; 36; 42; 36; 48), dont l'axe longitudinal est sensiblement vertical par rapport à la direction de déplacement du véhicule.

2. Réservoir de carburant selon la revendication 1, **caractérisé en ce qu'**un angle aigu (40) formé entre l'élément en forme de paroi (12; 36; 42; 46; 48; 50; 56) et une paroi (16) du réservoir de carburant se trouve sur le côté de l'élément en forme de paroi qui est dirigé vers la paroi respectivement à mettre à l'abri des mouvements du carburant (28, 30).

3. Réservoir de carburant selon la revendication 1, **caractérisé en ce que** l'élément en forme de paroi (12; 36; 42; 46; 48; 50; 56) est muni de trous (34) et/ou d'évidements marginaux (32) placés du côté du fond.

4. Réservoir de carburant selon la revendication 1, **caractérisé en ce qu'**à chaque zone de paroi à mettre à l'abri des mouvements du carburant (28, 30) est attribué un élément en forme de paroi particulier (42, 46).

5. Réservoir de carburant selon la revendication 1, **caractérisé en ce que** l'élément en forme de paroi est disposé librement dans le réservoir de carburant.

6. Réservoir de carburant selon la revendication 1, **caractérisé en ce que** l'élément en forme de paroi se compose d'un matériau souple, de préférence d'un matériau synthétique.

7. Réservoir de carburant selon la revendication 1, **caractérisé en ce que** l'élément en forme de paroi (12) est adapté aux contours du réservoir.

8. Réservoir de carburant selon la revendication 1, **caractérisé en ce que** l'insert en forme de paroi est disposé avec une précontrainte dans le réservoir.

9. Réservoir de carburant selon la revendication 1, **caractérisé en ce que** l'insert est réalisé d'une seule pièce en matériau synthétique thermoplastique en utilisant un procédé par soufflage.

10. Réservoir de carburant selon la revendication 1, **caractérisé en ce que** l'insert en forme de paroi est introduit dans le réservoir lors de la fabrication de celui-ci.

11. Réservoir de carburant selon la revendication 10, **caractérisé en ce que** l'insert se compose au moins partiellement d'un matériau, par exemple un matériau synthétique thermoplastique, qui peut être soudé avec le matériau dans lequel est réalisé, au moins partiellement, le réservoir et que, lors de la fabrication du réservoir, il est fixé à la paroi de ce dernier au moyen d'une liaison soudée.

12. Réservoir de carburant selon la revendication 11, **caractérisé en ce que** l'insert est relié à la paroi du fond du réservoir de carburant.

13. Réservoir de carburant selon la revendication 11, **caractérisé en ce que** l'insert est relié à au moins une paroi latérale du réservoir.
